# EUROPEAN PATENT APPLICATION

(11) **EP 4 354 634 A1**
(43) Date of publication of application: **17.04.2024**
(21) Application number: 22900402.3
(22) Date of filing: 26.11.2022
(51) Int. Cl.: H01M 50/507, H01M 50/531

(54) **BUSBAR ASSEMBLY, BATTERY AND POWER CONSUMING DEVICE**

(30) Priority: 01.12.2021 CN 202123006685 U
(71) Applicant: Contemporary Amperex Technology Co., Limited, Ningde City, Fujian 352100 (CN)
(72) Inventor: WANG, Yongguang, Ningde City, Fujian 352100 (CN); YANG, Hui, Ningde City, Fujian 352100 (CN); HUANG, Yangzhi, Ningde City, Fujian 352100 (CN); WANG, Peng, Ningde City, Fujian 352100 (CN); SUN, Zhanyu, Ningde City, Fujian 352100 (CN)
(74) Representative: Rowlands, Stuart Michael
(86) International application number: PCT/CN2022/134529
(87) International publication number: WO 2023/098598

(57) **Abstract**

Disclosed in the present application are a busbar assembly (10), a battery and a power consuming device. The busbar assembly (10) comprises a busbar support (11) and a busbar (12), wherein the busbar support (11) is provided with a plurality of abutting portions (111) and a plurality of first notches (112) which are alternately distributed in a preset direction, and each first notch (112) is used for allowing a tab (210) of a battery cell assembly (20) to be inserted; and the busbar (12) is connected to at least some of the abutting portions (111) and is used for being electrically connected to the tabs (210) inserted into the first notches (112). The busbar assembly (10) can reduce the difficulty in assembly with the battery cell assembly (20).

## Description

The present application claims priority to Chinese patent application No. 202123006685.5, filed with the China National Intellectual Property Administration on December 1, 2021 and entitled "BUSBAR ASSEMBLY, BATTERY, AND ELECTRICAL APPARATUS", the contents of which are incorporated by reference in their entirety in the present application.

### TECHNICAL FIELD

The present application relates to the technical field of battery production, and in particular, to a busbar assembly, a battery, and an electrical apparatus.

### BACKGROUND

The busbar assembly, as an important component in the battery, functions to connect a plurality of battery cell units together in the battery, and compared to the cable connection form, the busbar in the busbar assembly has a larger contact area, and the connection of the plurality of battery cell units through the busbar can reduce the temperature rise of the battery.

However, the present busbar assembly, when assembled with the battery cell assembly, is more difficult to assemble because the line of sight is obstructed at the tabs of the plurality of battery cell units, and the assembler is unable to confirm that the tab of each battery cell unit can accurately pass through the busbar assembly.

### TECHNICAL PROBLEM

One of the objectives of embodiments of the present application is to provide a busbar assembly, a battery, and an electrical apparatus, including, but not limited to, solving a problem of difficulty in assembling the busbar assembly with the battery cell.

### TECHNICAL SOLUTION

The technical solution that embodiments of the present application adopts is as follows:
In a first aspect, a busbar assembly is provided, comprising a busbar bracket and a busbar, wherein the busbar bracket is provided with a plurality of abutting portions and a plurality of first notches alternately distributed along a preset direction, each of the first notches being used for insertion of a tab of a battery cell assembly; and the busbar is connected to at least part of the abutting portions and used for electrical connection with tabs inserted into the first notches.

By the plurality of first notches provided on the busbar bracket, the busbar assembly provided in an implementation of the present application can function to guide the tabs of the battery cell assembly during assembly of the battery cell assembly so that the tab of each battery cell unit in the battery cell assembly can be smoothly inserted into the first notches and be electrically connected with the busbar connected to the abutting portion. Therefore, during the process of inserting the tabs of the battery cell assembly into the first notches, the assembler can clearly observe the matching situation of the tabs of the battery cell assembly with the first notches, as well as the degree of deviation between the two, thereby enabling a higher degree of visualization of the assembly process of the busbar assembly with the battery cell assembly, which is conducive to the real-time adjustments made by the assembler and reduces the difficulty in the assembly process.

In an embodiment, the busbar comprises a plurality of busbar bodies spaced apart from each other, every two adjacent ones of the busbar bodies being spaced apart from each other by one of the abutting portions, and each of the busbar bodies being used for electrically connecting tabs inserted into the first notches adjacent thereto.

Embodiments of the present application, by a plurality of busbar bodies spaced apart from each other, can implement series connection between a plurality of battery cell units.

In an embodiment, one of the busbar bodies located outermost in the preset direction is provided with a wiring portion extending from the busbar body in a direction away from the others of the busbar bodies, and the busbar bracket is provided with a positioning slot for snapping to the wiring portion.

Embodiments of the present application, by the provision of the wiring portion, can provide a basis for electrical connection with the outside.

In an embodiment, the wiring portion is provided with a through hole.

Embodiments of the present application, by the provision of the through hole, can position the external electrical connecting component.

In an embodiment, each of the busbar bodies are further provided with a snap-fit portion, the snap-fit portion of each of the busbar bodies being bent and extended towards the preset direction from the busbar body, and being provided with a positioning notch, and the busbar bracket is provided with a clamping block for insertion into the positioning notch.

Embodiments of the present application, by the provision of the snap-fit portion on the busbar body and the clamping block on the busbar bracket, can snap the snap-fit portion of the busbar body into the clamping block on the busbar bracket, so as to implement the snap-fit between the two.

In an embodiment, the busbar bracket is provided with a plurality of hot-melt posts corresponding one-to-one with the plurality of busbar bodies, each of the busbar bodies being provided with a groove surrounding a corresponding one of the hot-melt posts, and each of the hot-melt posts fixing and connecting a corresponding one of the busbar bodies to the busbar bracket through hot-melting.

Embodiments of the present application, by hot-melting of the hot-melt post, can implement the fixing connection between the busbar body and the busbar bracket.

In an embodiment, the busbar bracket is provided with a plurality of hot-melt posts corresponding one-to-one with the plurality of busbar bodies, each of the busbar bodies being provided with a via hole surrounding a corresponding one of the hot-melt posts, and each of the hot-melt posts fixing and connecting a corresponding one of the busbar bodies to the busbar bracket through hot-melting.

By hot-melting of the hot-melt post, embodiments of the present application can implement the fixing connection between the busbar body and the busbar bracket.

In an embodiment, the busbar bracket is further provided with a plurality of blocking plates distributed along the preset direction, each of the blocking plates being located between the snap-fit portions of two adjacent ones of the busbar bodies.

Embodiments of the present application, by the provision of the blocking plate, can function to insulate and block two adjacent busbar bodies.

In an embodiment, the busbar bracket is further provided with a plurality of guide portions and a plurality of second notches alternately distributed along the preset direction, the plurality of second notches and the plurality of first notches being located at two opposite sides of the busbar bracket, and the plurality of guide portions protruding towards a side far from the busbar.

Embodiments of the present application, by the provision of the second notches, can function to guide the insertion of the support posts on the support tool when the busbar assembly is mounted to the support tool.

In an embodiment, the busbar bracket is provided with a positioning hole on a side close to the plurality of second notches.

Embodiments of the present application, by the provision of the positioning hole, can function to guide the mounting of the busbar bracket to the support tool.

In a second aspect, a battery is provided, comprising: a battery cell assembly; and busbar assemblies described above, two busbar assemblies being provided oppositely on two sides of the battery cell assembly, wherein tabs on one side of the battery cell assembly are inserted into the first notches on the busbar bracket of one of the busbar assemblies and are electrically connected to the busbar of that busbar assembly, and tabs on the other side of the battery cell assembly are inserted into the first notches on the busbar bracket of the other one of the busbar assemblies and are electrically connected to the busbar of that busbar assembly.

In an embodiment, the battery cell assembly comprises a plurality of battery cell units arranged, two adjacent ones of the battery cell units being provided inversely so that a positive tab of one of the battery cell units is located on the same side of the battery cell assembly as a negative tab of the other one of the battery cell units, whereby the plurality of battery cell units of the battery cell assembly are connected in series.

By the inverse provision of two adjacent battery cell units, embodiments of the present application enable the two adjacent battery cell units to be connected in series when the tabs of the battery cell units are electrically connected to the busbar, so as to connect all the battery cell units in series all the way down.

In an embodiment, the battery cell assembly comprises a plurality of battery cell units arranged, the plurality of battery cell units of the battery cell assembly being connected in series or in parallel.

In a third aspect, an electrical apparatus is provided, comprising a battery described above.

In an embodiment, the electrical apparatus is one of a mobile phone, a tablet, a laptop, an electric toy, an electric tool, a battery vehicle, an electric car, a ship or a spacecraft.

### BENEFICIAL EFFECTS

The busbar assembly, the battery and the electrical apparatus provided in implementations of the present application have the following beneficial effects: with the plurality of first notches provided on the busbar bracket, they can function to guide the tabs of the battery cell assembly during assembly with the battery cell assembly, so that the tab of each battery cell unit in the battery cell assembly can be smoothly inserted into the first notches and be electrically connected with the busbar connected to the abutting portion; therefore, during the process of inserting the tabs of the battery cell assembly into the first notches, the assembler can clearly observe the matching situation of the tabs of the battery cell assembly with the first notches, as well as the degree of deviation between the two, thereby enabling a higher degree of visualization of the assembly process of the busbar assembly with the battery cell assembly, which is conducive to the real-time adjustments made by the assembler and reduces the difficulty in the assembly process.

### DESCRIPTION OF DRAWINGS

In order to more clearly illustrate the technical solutions in embodiments of the present application, the accompanying drawings that need to be used in the description of the embodiments or exemplary techniques will be briefly introduced below, and it will be apparent that the accompanying drawings in the following description are only some of the embodiments of the present application, and that other accompanying drawings can be obtained based on these drawings for a person of ordinary skill in the art, without any creative labor.
Fig. 1 is a three-dimensional structural schematic diagram of a battery cell assembly according to embodiments of the present application;
Fig. 2 is a three-dimensional structural schematic diagram of a busbar assembly according to embodiments of the present application;
Fig. 3 is a front-view structural schematic diagram of a busbar bracket according to embodiments of the present application;
Fig. 4 is a three-dimensional structural schematic diagram of a busbar body when it is provided with a wiring portion according to embodiments of the present application;
Fig. 5 is a three-dimensional structural schematic diagram of a busbar body when it is not provided with a wiring portion according to embodiments of the present application;
Fig. 6 is an exploded structural schematic diagram of a battery cell assembly when it is assembled with a busbar assembly according to embodiments of the present application;
Fig. 7 is an exploded structural schematic diagram of a busbar assembly when it is mounted to a support tool according to embodiments of the present application;
Fig. 8 is an enlarged structural schematic diagram of part A in Fig. 7;
Fig. 9 is a structural schematic diagram of the battery cell assembly and the busbar assembly when they are in an assembly process according to embodiments of the present application;
Fig. 10 is a front-view structural schematic diagram of the battery cell assembly and the busbar assembly after completion of assembly according to embodiments of the present application;
Fig. 11 is a top-view structural schematic diagram of the battery cell assembly and the busbar assembly after completion of assembly according to embodiments of the present application; and Fig. 12 is an enlarged structural schematic diagram of part B in Fig. 11.

### Reference numerals:

10, busbar assembly; 11, busbar bracket; 111, abutting portion; 112, first notch; 113, positioning slot; 114, clamping block; 115, hot-melt post; 116, blocking plate; 117, guide portion; 118, second notch; 119, positioning hole; 12, busbar; 120, busbar body; 121, wiring portion; 122, through hole; 123, snap-fit portion; 124, positioning notch; 125, groove;
20, battery cell assembly; 21, battery cell unit; 210, tab; 22, end plate; 23, strap;
30, support tool; 31, support post; 32, positioning post.

### DETAILED DESCRIPTION

In order to make the objectives, technical solutions and advantages of the present application clearer and more understandable, the present application is described in further detail hereinafter in conjunction with the accompanying drawings and embodiments. It should be understood that the specific embodiments described herein are only for explaining the present invention and are not intended to limit the present application. Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application. Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments. It is to be noted that the terms "comprise/include" and "have" and any variations thereof in the specification and the claims of the present application and in the description of drawings above are intended to cover non-exclusive inclusion.

The term "and/or" is only an association relationship for describing associated objects, which indicates that there may be three relationships, for example A and/or B may represent three situations: A exists alone, both A and B exist, and B exists alone. In addition, the character "/" herein generally means that the associated objects before and after it are in an "or" relationship.

When a component is described to be "fixed to", "mounted on" or " provided on" another component, it may be directly on the another component or indirectly on that another component. When a component is described to be "connected" to another component, it may be directly or indirectly connected to that another component, either fixedly connected, detachably connected or integrated as a whole; either mechanically connected or electrically connected; either directly connected or indirectly connected through an intermediate medium; either in an internal communication between the two elements or in a mutual interaction relationship between the two elements.

The orientation or position relationship indicated by the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc., are based on the orientation or position relationship shown in the drawings and are intended to facilitate the description only, rather than indicating or implying that the apparatus or element referred to must have a particular orientation or be constructed and operated in a particular orientation, and therefore are not to be interpreted as limitations on the present application. For those of ordinary skill in the art, the specific meanings of the above terms can be understood according to specific situations.

Terms "first" and "second" are used only for descriptive purposes and are not to be understood as indicating or implying relative importance or implicitly specifying the number of technical features. The meaning of "a plurality of is two or more, unless otherwise explicitly and specifically defined. Similarly, "a plurality of groups" means two or more groups (including two groups), and "a plurality of plates" means two or more plates (including two plates).

In order to illustrate the technical solutions provided in the present application, a detailed description is given below in conjunction with specific accompanying drawings and embodiments of the present application.

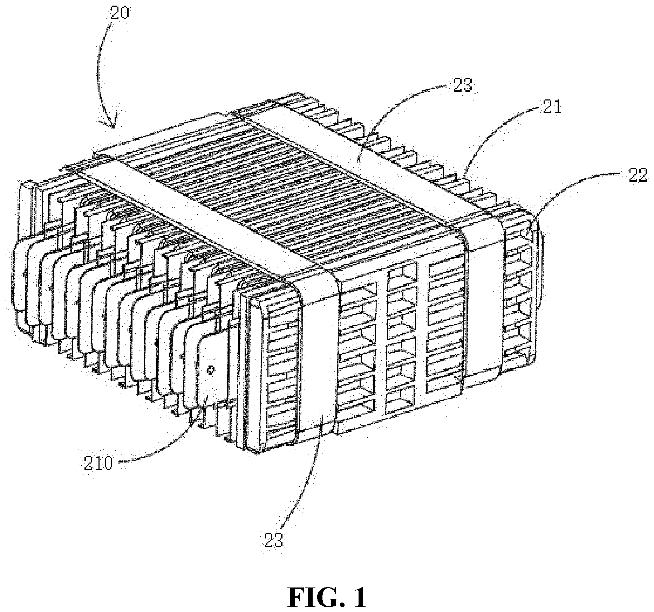

With the rapid development of new energy sources, batteries are more and more widely used. In order to ensure that the battery has sufficient energy density in the application, as shown in Fig. 1, a plurality of battery cell units 21 are usually connected in series or in parallel to form a battery cell assembly 20, wherein the battery cell unit 21 is the smallest energy unit constituting the battery, which is used for realizing the conversion of the chemical energy and the electrical energy. The battery cell unit 21 is formed primarily by the winding or laminated placement of a positive electrode plate and a negative electrode plate, and is usually provided with a separator between the positive electrode plate and the negative electrode plate. The portions of the positive electrode plate and the negative electrode plate having an active material form a main body part of the battery cell unit 21, and the portions of the positive electrode plate and the negative electrode plate not having an active material each form a tab 210. During the charging and discharging process of the battery, the positive electrode active material and the negative electrode active material react with the electrolyte solution, and the tabs 210 provide the connection basis for the formation of the current loop. A plurality of battery cell units 21 are stacked together in the same direction, with end plates 22 added on both sides, and are bound by a strap 23, and in order to ensure that the battery cell units 21 will not be easily damaged by pressing of the end plates 22, a layer of cushioning pad can be added to the side of the end plate 22 that is affixed to the battery cell units 21.

The busbar assembly is used to realize electrical connection between the plurality of battery cell units 21 in the battery cell assembly 20, and the busbar assembly comprises a busbar used for the electrical connection function, and a busbar bracket used to support and fix the busbar, wherein the busbar bracket is made of an insulating material, and by means of the busbar, the tabs 210 of the plurality of battery cell units 21 can be connected together, and the connection form can be a series connection or a parallel connection.

However, the applicant notes that current busbar assemblies are typically designed to be in the form of via holes and the battery cell assembly 20 is assembled directly facing the busbar assembly, making it necessary for the tab 210 of each battery cell unit 21 to pass through the via holes during the assembly process and then be welded to the busbar. During the actual assembly process by the assembler, as the battery cell assembly 20 is kept directly facing the busbar assembly, the line of sight will be blocked by the assembly components and thus he or she will not be able to confirm that the tab 210 of each battery cell unit 21 can accurately pass through the via hole, and in particular when the number of the battery cell units 21 is large, the difficulty of the assembly will be substantially increased.

In order to reduce the difficulty in assembling the busbar assembly with the battery cell assembly 20, the applicant has found that the busbar assembly can be designed in the form of a guide notch, which means that a plurality of notches are opened on the busbar bracket, where each of the notches can ensure the smooth insertion of a tab 210 of the battery cell assembly 20.

After adopting such a busbar assembly, the battery cell assembly 20 is no longer assembled directly facing the busbar assembly and the assembler only needs to insert the tab 210 of each battery cell unit 21 in the battery cell assembly 20 into the notch of the busbar bracket, and then carry out welding between the tab 210 and the busbar assembly to complete the assembly between the busbar assembly and the battery cell assembly 20. Since the tab 210 of each battery cell unit 21 in the battery cell assembly 20 and the busbar assembly are staggered from each other during the assembly process, the assembler can always observe the process of gradually inserting the tab 210 of each battery cell unit 21 into the notch on the busbar bracket, and can directly perform deviation adjustment, so the degree of visualization during the assembly process is higher, thereby reducing the difficulty of assembly.

The busbar assembly provided in embodiments of the present application can, but is not limited to, be used in lithium-sulfur batteries, sodium-ion batteries, or magnesium-ion batteries.

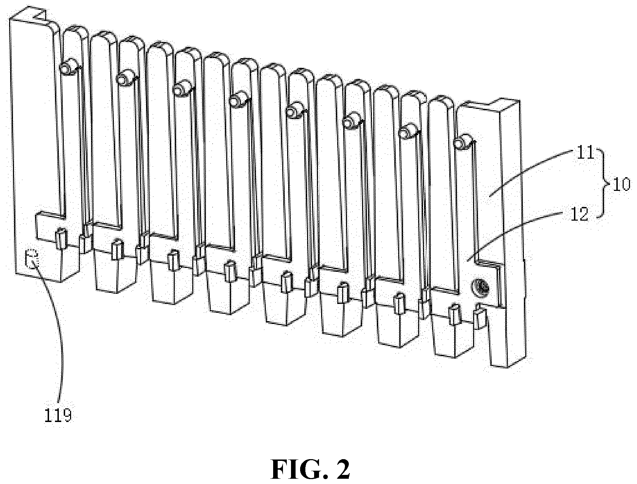

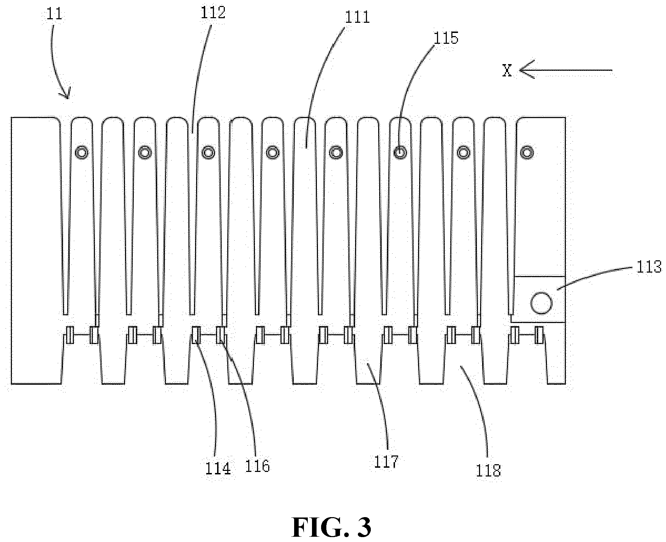

As shown in Figs. 2 and 3, the busbar assembly 10 provided in embodiments of the present application comprises a busbar bracket 11 and a busbar 12, wherein the busbar bracket 11 is provided with a plurality of abutting portions 111 and a plurality of first notches 112 alternately distributed along a preset direction (the direction indicated by arrow X in Fig. 3), each of the first notches 112 being used for insertion of a tab 210 of a battery cell assembly 20; and the busbar 12 is connected to at least part of the abutting portions 111 and used for electrical connection with tabs 210 inserted in the first notches 112.

The busbar bracket 11 is a component for supporting and fixing the busbar 12, and the busbar 12 is a component for electrical connection with the tabs 210 of the battery cell assembly 20. The busbar bracket 11 being provided with a plurality of abutting portions 111 and a plurality of first notches 112 alternately distributed along a preset direction means that the plurality of first notches 112 provided on the busbar bracket 11 are distributed along the same direction, two adjacent first notches 112 have a spacing therebetween, and adjacent to each of the first notches 112 is one abutting portion 111, wherein the first notches 112 are guide notches for insertion of tabs 210 of the battery cell assembly 20.

With the plurality of first notches 112 provided on the busbar bracket 11, it is possible to function to guide the tabs 210 of the battery cell assembly 20 during assembly with the battery cell assembly 20, so that the tab 210 of each battery cell unit 21 in the battery cell assembly 20 can be smoothly inserted into the first notches 112 and be electrically connected with the busbar 12 connected to the abutting portion 111; therefore, during the process of inserting the tabs 210 of the battery cell assembly 20 into the first notches 112, the assembler can clearly observe the matching situation of the tabs 210 of the battery cell assembly 20 with the first notches 112, as well as the degree of deviation between the two, thereby enabling a higher degree of visualization of the assembly process of the busbar assembly 10 with the battery cell assembly 20, which is conducive to the real-time adjustments made by the assembler and reduces the difficulty in the assembly process.

Here, the busbar 12 may be used in an occasion of connecting a plurality of battery cell units 21 in the battery cell assembly 20 in series, or in an occasion of connecting a plurality of battery cell units 21 in the battery cell assembly 20 in parallel. The specific form of the busbar assembly 10 is illustrated below with an example in which the busbar 12 is used in an occasion of connecting a plurality of battery cell units 21 in the battery cell assembly 20 in series.

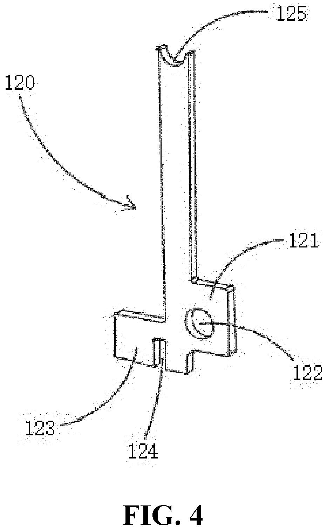

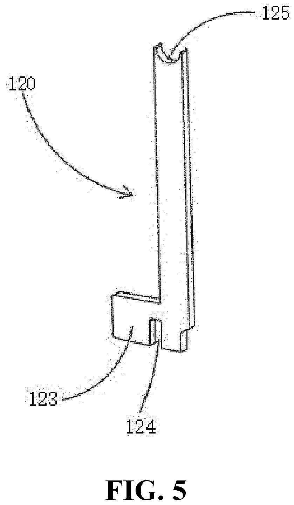

In some embodiments of the present application, optionally, the busbar 12 comprises a plurality of busbar bodies 120 spaced apart from each other (as shown in Figs. 4 and 5), every two adjacent ones of the busbar bodies 120 being spaced apart from each other by one of the abutting portions 111, and each of the busbar bodies 120 being used for electrically connecting tabs 210 inserted into the first notches 112 adjacent thereto.

The busbar bodies 120 refer to single entities that form the busbar 12, and the plurality of busbar bodies 120 being spaced apart from each other means that the plurality of busbar bodies 120 are in a mutually insulating condition and are not electrically connected together with each other.

By spacing the plurality of busbar bodies 120 apart from each other, it is possible to enable each busbar body 120 to electrically connect the positive tab of one battery cell unit 21 among two adjacent battery cell units 21 with the negative tab of the other battery cell unit 21 while ensuring that the plurality of battery cell units 21 in the battery cell assembly 20 are connected in series all the way down, thereby realizing the series connection of the plurality of battery cell units 21 in the battery cell assembly 20.

Here, in the battery cell assembly 20, the tabs 210 of the plurality of battery cell units 21 are provided in the form of one positive and one negative, which means that two adjacent battery cell units 21 are inversely provided so that the positive tab 210 of one of the battery cell units 21 is located on the same side of the battery cell assembly 20 as the negative tab 210 of the other battery cell unit 21.

In some embodiments of the present application, optionally, one of the busbar bodies 120 located outermost in the preset direction is provided with a wiring portion 121 (i.e., the busbar body shown in Fig. 4), the wiring portion 121 extending from this busbar body 120 in a direction away from the others of the busbar bodies 120, and the busbar bracket 11 is provided with a positioning slot 113 for snapping to the wiring portion 121.

The wiring portion 121 refers to a portion provided on the busbar body 120 that is used for electrical connection with the outside, and since the busbar body 120 herein is used in an occasion of connecting the plurality of battery cell units 21 in the battery cell assembly 20 in series, the wiring portion 121 is provided on one of the busbar bodies 120 located outermost in the preset direction, and the positioning slot 113 refers to a groove structure provided on the busbar bracket 11 for snapping to the wiring portion 121.

By providing the wiring portion 121 on one of the busbar bodies 120 located outermost in the preset direction, a connection basis and sufficient connection space can be provided for electrical connection of the battery cell assembly 20 to the outside.

In some embodiments of the present application, optionally, the wiring portion 121 is provided with a through hole 122.

The through hole 122 refers to a via hole provided on the wiring portion 121, and by providing the through hole 122 on the wiring portion 121, the positioning of the external connecting component can be facilitated.

In some embodiments of the present application, optionally, each of the busbar bodies 120 is further provided with a snap-fit portion 123, the snap-fit portion 123 of each of the busbar bodies 120 being bent and extended towards the preset direction (the direction indicated by the arrow X in Fig. 3) from the busbar body 120, and the snap-fit portion 123 of each of the busbar bodies 120 being provided with a positioning notch 124, and the busbar bracket 11 is provided with a clamping block 114 for insertion into the positioning notch 124.

The snap-fit portion 123 refers to a portion of the busbar body 120 that is snap-fit to the busbar bracket 11, and the positioning notch 124 refers to a notch structure provided on the busbar body 120.

By the provision of the snap-fit portion 123, snap-fit between each busbar body 120 and the busbar bracket 11 can be realized, which is conducive to the positioning of the busbar body 120 on the busbar bracket 11. During the snap-fit between the busbar body 120 and the busbar bracket 11, the clamping block 114 on the busbar bracket 11 is inserted into the positioning notch 124 on the busbar body 120, so that the busbar body 120 is snap onto the busbar bracket 11.

In some embodiments of the present application, optionally, the busbar bracket 11 is provided with a plurality of hot-melt posts 115 corresponding one-to-one with the plurality of busbar bodies 120, each of the busbar bodies 120 being provided with a groove 125 surrounding a corresponding one of the hot-melt posts 115, and each of the hot-melt posts 115 fixing and connecting a corresponding one of the busbar bodies 120 to the busbar bracket 11 through hot-melting.

The hot-melt post 115 is a post provided on the busbar bracket 11, which can be hot-melted into a mushroom shape to function to fix the busbar body 120 provided surrounding the hot-melt post 115.

By hot-melting the hot-melt post 115, the head of the hot-melt post 115 is formed in the shape of a mushroom, so that the busbar body 120 provided surrounding the hot-melt post 115 can be prevented from being detached from the busbar bracket 11, and together with the clamping block 114, it functions to fix and connect the busbar body 120 to the busbar bracket 11.

Among them, the clamping block 114 can prevent the busbar body 120 from detaching from the lower part of the drawing surface of Fig. 3, and the hot-melt post 115 can prevent the busbar body 120 from detaching from the upper part of the drawing surface of Fig. 3, and at the same time, both of them can prevent the reflux body 120 from detaching from the left and right directions of the drawing surface of Fig. 3, and thus function to fix the busbar body 120 securely to the busbar bracket 11.

Here, it is also possible to provide a via hole structure surrounding the hot-melt post 115 on the busbar body 120, and similarly, to fix and connect the busbar body 120 to the busbar bracket 11 after hot-melting the hot-melt post 115.

When connecting the busbar body 120 to the busbar bracket 11, the busbar body 120 is affixed to the busbar bracket 11 along a direction directly facing the busbar bracket 11, so that the clamping block 114 on the busbar bracket 11 is inserted into the positioning notch 124 on the busbar body 120 and the groove 125 on the busbar body 120 is made to surround the hot-melt post 115 on the busbar bracket 11, and then the hot-melt post 115 is hot-melted to fix the busbar body 120 to the busbar bracket 11.

In some embodiments of the present application, optionally, the busbar bracket 11 is further provided with a plurality of blocking plates 116 distributed along the preset direction, each of the blocking plates 116 being located between the snap-fit portions 123 of two adjacent ones of the busbar bodies 120.

The blocking plate 116 can function to insulate and block two adjacent busbar bodies 120 to ensure that the two adjacent busbar bodies 120 are in an insulated state.

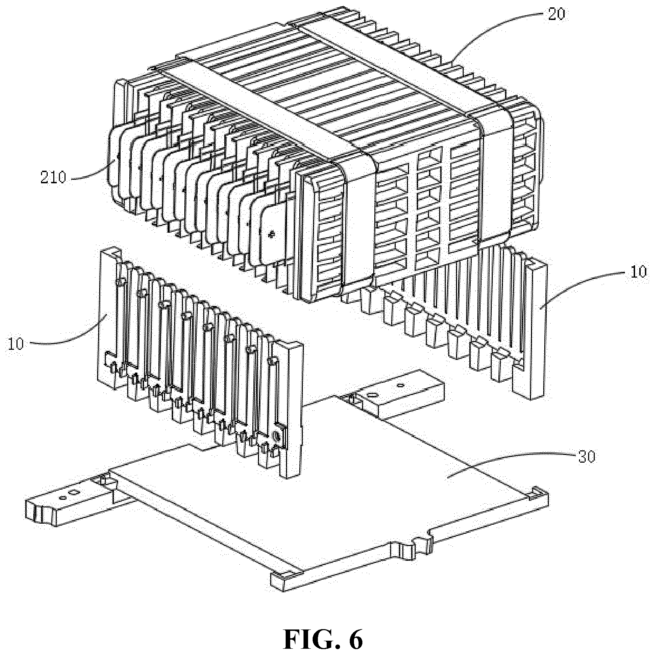

During assembly of the battery cell assembly 20 with the busbar assembly 10, as shown in Fig. 6, the busbar assembly 10 may be mounted to the support tool 30 first, and then the battery cell assembly 20 may be lowered until the tabs 210 of the battery cell assembly 20 are inserted into the first notches 112 on the busbar bracket 11.

To facilitate mounting of the busbar assembly 10 to the support tool 30, in some embodiments of the present application, optionally, the busbar bracket 11 is further provided with a plurality of guide portions 117 and a plurality of second notches 118 alternately distributed along the preset direction, the plurality of second notches 118 and the plurality of first notches 112 being located at two opposite sides of the busbar bracket 11, and the plurality of guide portions 117 protruding towards a side far from the busbar 12.

The busbar bracket 11 being further provided with a plurality of guide portions 117 and a plurality of second notches 118 alternately distributed along the preset direction means that the plurality of second notches 118 provided on the busbar bracket 11 are distributed along the same direction, two adjacent second notches 118 have a spacing therebetween, and adjacent to each of the second notches 118 is one guide portion 117, wherein the second notches 118 are notches for providing guiding for the busbar assembly 10 when it is mounted to the support tool, and the plurality of second notches 118 are distributed in the same direction as the distribution direction of the plurality of first notches 112, also in the direction shown by arrow X in Fig. 3.

The plurality of second notches 118 and the plurality of first notches 112 being located at two opposite sides of the busbar bracket 11 means that the second notches 118 are opened in a direction opposite to the opening direction of the first notches 112. As shown in Fig. 3, the first notches 112 are opened from the top to the bottom of the busbar bracket 11 in Fig. 3, whereas the second notches 118 are opened from the bottom to the top of the busbar bracket 11 in Fig. 3.

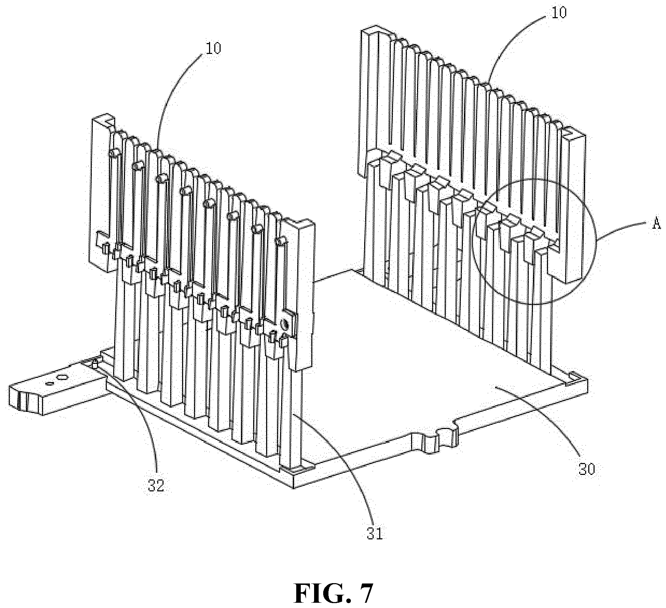

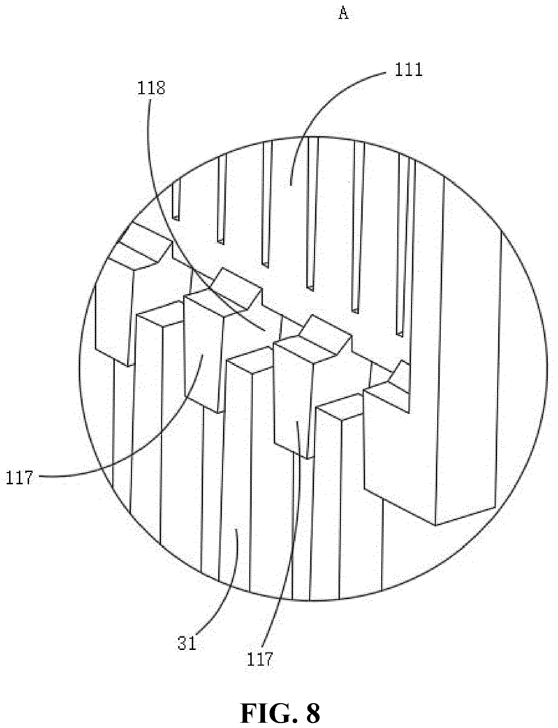

The second notches 118 and the guide portions 117 provided on the busbar 12, as shown in Figs. 7 and 8, can function to guide the mounting of the busbar assembly 10 to the support tool 10, thereby facilitating the easy mounting of the busbar assembly 10 to the support tool 30, so that support posts 31 on the support tool 30 can be inserted along the second notches 118.

In addition, the support posts 31 provided on the support tool 30 can withstand the pressure from the welding tip of the welding gun during the process of welding the tabs 210 of the battery cell assembly 20.

As shown in Fig. 7, the support tool 30 is a rectangular flat plate, and the support tool 30 is provided with recessed regions on two opposite sides to position busbar brackets 11 to be mounted, and at the same time, the recessed region of the support tool 30 is provided with a row of support posts 31, wherein the support post 31 may be inserted along the second notch 118 between two adjacent guide portions 117 when the busbar bracket 11 is mounted to the support tool 30 until the support post 31 abuts against the abutting portion 111 of the busbar bracket 11, then the assembly of the battery cell assembly 20 and the busbar assembly 10 is carried out and, after welding of the tabs 210 is completed, the battery cell assembly 20 and the busbar assembly 10 that have been assembled are removed from the support tool 30.

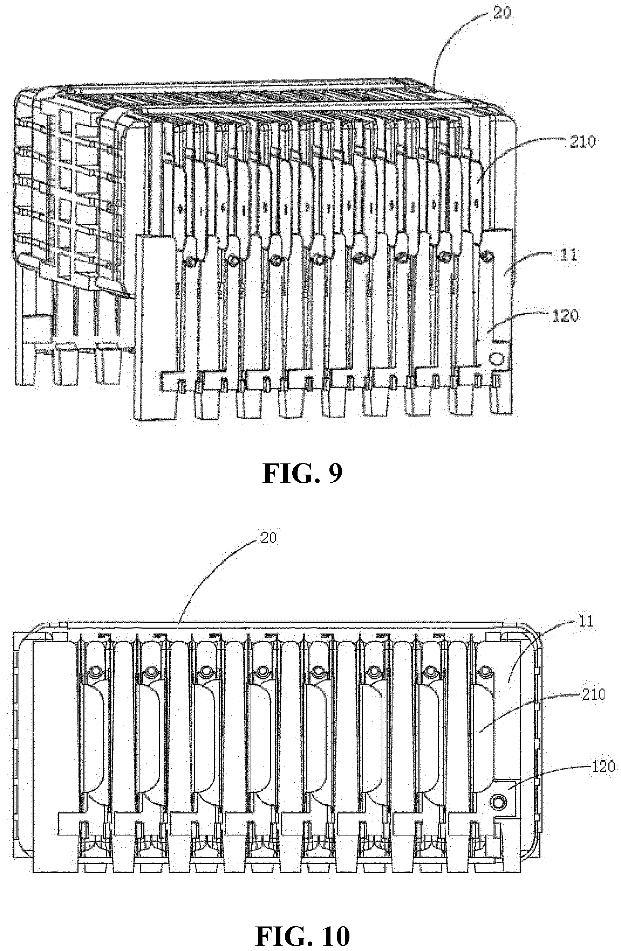

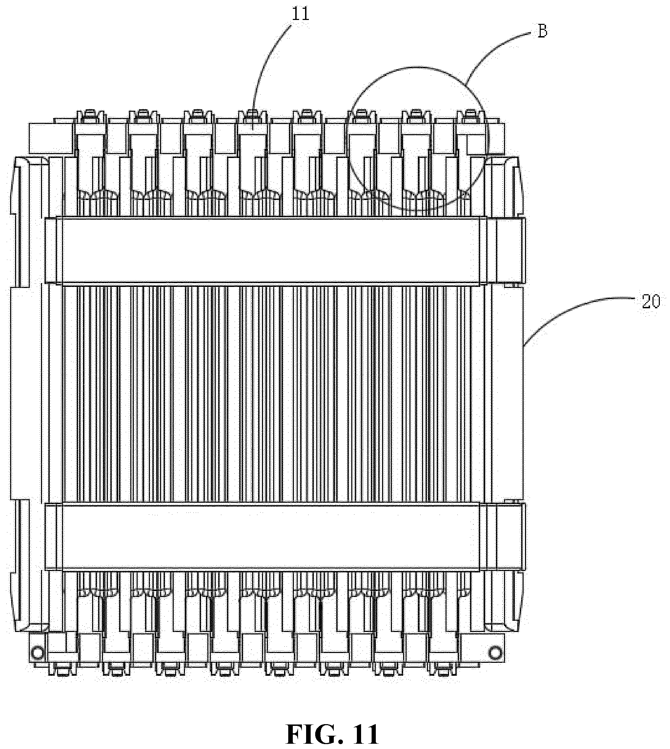

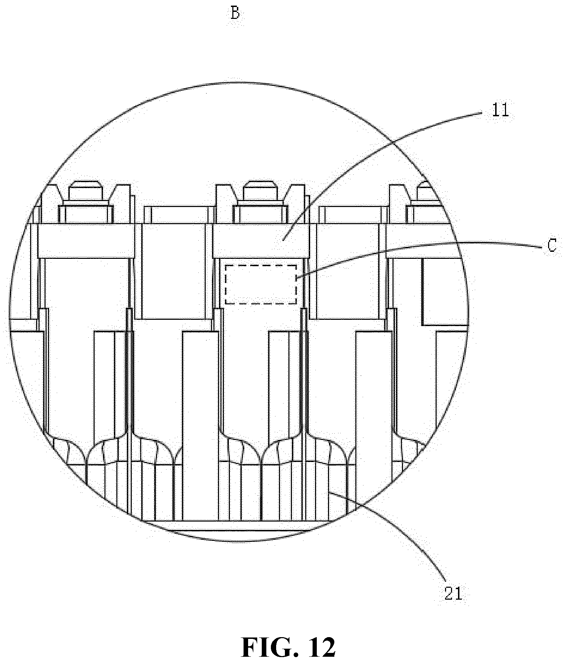

Fig. 9 illustrates a structure in which the tabs 210 of the battery cell assembly 20 are gradually lowered and inserted into the busbar bracket 11, Figs. 10 and 11 illustrate a front-view structure and a top-view structure, respectively, after completion of welding of the tabs 210 of the battery cell assembly 20 to the busbar body 120, and Fig. 12 illustrates the space (the region shown in rectangular box C) that exists between the busbar bracket 11 and the battery cell unit 21, wherein the space is the space occupied by the support post 31 on the support tool 30 when the battery cell assembly 20 with the busbar assembly 10 assembled is removed from the support tool 30, so as to withstand the pressure from the welding tip of the welding gun by the support post 31 during the process of welding of the tabs 210 of the battery cell assembly 20 to the busbar body 120.

In some embodiments of the present application, optionally, the busbar bracket 11 is provided with a positioning hole 119 (shown in Fig. 2) on a side close to the plurality of second notches 118.

The positioning hole 119 is used to mate with the positioning post 32 on the support tool 30 to function to position the busbar bracket 11 when the busbar assembly 10 is mounted to the support tool 30.

In some embodiments of the present application, the busbar assembly 10 comprises a busbar bracket 11 and a busbar 12, wherein the busbar bracket 11 is provided with a plurality of abutting portions 111 and a plurality of first notches 112 alternately distributed along a preset direction, each of the first notches 112 being used for insertion of a tab 210 of the battery cell assembly 20; the busbar bracket 11 is further provided with a plurality of guide portions 117 and a plurality of second notches 118 alternately distributed along the preset direction, the plurality of second notches 118 and the plurality of first notches 112 being located at two opposite sides of the busbar bracket 11, and the plurality of guide portions 117 protruding towards a side far from the busbar 12; and the busbar 12 comprises a plurality of busbar bodies 120 spaced apart from each other, wherein each busbar body 120 is connected to one of the abutting portions 111, every two of the busbar bodies 120 are spaced apart from each other by one of the abutting portions 111, one of the busbar bodies 120 located outermost in the preset direction is provided with a wiring portion 121, and each busbar body 120 is fixed with the busbar bracket 11 through hot-melting.

Embodiments of the present application further provide a battery, comprising: a battery cell assembly 20; and busbar assemblies 10 described in the above embodiments, two busbar assemblies 10 being provided oppositely on two sides of the battery cell assembly 20, wherein tabs 210 on one side of the battery cell assembly 20 are inserted into the first notches 112 on the busbar bracket 11 of one of the busbar assemblies 10 and are electrically connected to the busbar 12 of that busbar assembly 10, and tabs 210 on the other side of the battery cell assembly 20 are inserted into the first notches 112 on the busbar bracket 11 of the other one of the busbar assemblies 10 and are electrically connected to the busbar 12 of that busbar assembly 10.

During the process of inserting the tabs 210 of the battery cell assembly 20 into the first notches 112, the assembler can clearly observe the matching situation of the tabs 210 of the battery cell assembly 20 with the first notches 112, as well as the degree of deviation between the two, thereby enabling a higher degree of visualization of the assembly process of the busbar assembly 10 with the battery cell assembly 20, which is conducive to the real-time adjustments made by the assembler and reduces the difficulty in the assembly process.

Embodiments of the present application further provide an electrical apparatus, the electrical apparatus using the battery in the above embodiments as the power source. The electrical apparatus provided in embodiments of the present application may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

The above are only optional embodiments of the present application and are not intended to limit the present application. For those skilled in the art, the present application may be subject to various modifications and changes. Any modifications, equivalent substitutions, improvements, etc., made within the spirit and principles of the present application shall be included within the scope of the claims of the present application.

## Claims

1. A busbar assembly, comprising:
a busbar bracket provided with a plurality of abutting portions and a plurality of first notches alternately distributed along a preset direction, each of the first notches being used for insertion of a tab of a battery cell assembly; and
a busbar connected to at least part of the abutting portions and used for electrical connection with tabs inserted into the first notches.

2. The busbar assembly according to claim 1, wherein:
the busbar comprises a plurality of busbar bodies spaced apart from each other, every two adjacent ones of the busbar bodies being spaced apart from each other by one of the abutting portions, and each of the busbar bodies being used for electrically connecting tabs inserted into the first notches adjacent thereto.

3. The busbar assembly according to claim 2, wherein:
one of the busbar bodies located outermost in the preset direction is provided with a wiring portion extending from the busbar body in a direction away from the others of the busbar bodies, and the busbar bracket is provided with a positioning slot for snapping to the wiring portion.

4. The busbar assembly according to claim 3, wherein:
the wiring portion is provided with a through hole.

5. The busbar assembly according to any one of claims 2 to 4, wherein:
each of the busbar bodies is further provided with a snap-fit portion, the snap-fit portion of each of the busbar bodies being bent and extended towards the preset direction from the busbar body, and being provided with a positioning notch, and the busbar bracket is provided with a clamping block for insertion into the positioning notch.

6. The busbar assembly according to claim 5, wherein:
the busbar bracket is further provided with a plurality of blocking plates distributed along the preset direction, each of the blocking plates being located between the snap-fit portions of two adjacent ones of the busbar bodies.

7. The busbar assembly according to any one of claims 2 to 6, wherein:
the busbar bracket is provided with a plurality of hot-melt posts corresponding one-to-one with the plurality of busbar bodies, each of the busbar bodies being provided with a groove surrounding a corresponding one of the hot-melt posts, and each of the hot-melt posts fixing and connecting a corresponding one of the busbar bodies to the busbar bracket through hot-melting.

8. The busbar assembly according to any one of claims 2 to 6, wherein:
the busbar bracket is provided with a plurality of hot-melt posts corresponding one-to-one with the plurality of busbar bodies, each of the busbar bodies being provided with a via hole surrounding a corresponding one of the hot-melt posts, and each of the hot-melt posts fixing and connecting a corresponding one of the busbar bodies to the busbar bracket through hot-melting.

9. The busbar assembly according to any one of claims 1 to 8, wherein:
the busbar bracket is further provided with a plurality of guide portions and a plurality of second notches alternately distributed along the preset direction, the plurality of second notches and the plurality of first notches being located at two opposite sides of the busbar bracket, and the plurality of guide portions protruding towards a side far from the busbar.

10. The busbar assembly according to claim 9, wherein:
the busbar bracket is provided with a positioning hole on a side close to the plurality of second notches.

11. A battery, comprising:
a battery cell assembly; and
busbar assemblies according to any one of claims 1 to 10, two busbar assemblies being provided oppositely on two sides of the battery cell assembly, wherein tabs on one side of the battery cell assembly are inserted into the first notches on the busbar bracket of one of the busbar assemblies and are electrically connected to the busbar of that busbar assembly, and tabs on the other side of the battery cell assembly are inserted into the first notches on the busbar bracket of the other one of the busbar assemblies and are electrically connected to the busbar of that busbar assembly.

12. The battery according to claim 11, wherein the battery cell assembly comprises a plurality of battery cell units arranged, two adjacent ones of the battery cell units being provided inversely so that a positive tab of one of the battery cell units is located on the same side of the battery cell assembly as a negative tab of the other one of the battery cell units, whereby the plurality of battery cell units of the battery cell assembly are connected in series.

13. The battery according to claim 11, wherein the battery cell assembly comprises a plurality of battery cell units arranged, the plurality of battery cell units of the battery cell assembly being connected in series or in parallel.

14. An electrical apparatus, comprising:
a battery according to any one of claims 11 to 13.

15. The electrical apparatus according to claim 14, wherein the electrical apparatus is one of a mobile phone, a tablet, a laptop, an electric toy, an electric tool, a battery vehicle, an electric car, a ship or a spacecraft.
